# EUROPÄISCHE PATENTSCHRIFT

(11) **EP 0 756 093 B1**
(45) Veröffentlichungstag und Bekanntmachung des Hinweises auf die Patenterteilung: **13.10.1999**
(21) Anmeldenummer: 96810387.9
(22) Anmeldetag: 12.06.1996
(51) Int. Cl.: F16B 19/14

(54) **Befestigungselement mit Dämpfungselement**
Fastening element with damping element
Dispositif de fixation avec élément amortisseur

(30) Priorität: 28.07.1995 DE 19527469
(43) Veröffentlichungstag der Anmeldung: 29.01.1997
(73) Patentinhaber: HILTI Aktiengesellschaft, 9494 Schaan (LI)
(72) Erfinder: Grazioli, Mario, 7000 Chur (CH); Rohrmoser, Günter, 6812 Meiningen (AT)
(74) Vertreter: Wildi, Roland

(56) Entgegenhaltungen:
- EP-A- 0 282 445
- US-A- 3 041 616

## Beschreibung

Die Erfindung betrifft ein Befestigungselement mit einem, einen Kopf aufweisenden Bolzen, der mittels eines pulverkraftbetriebenen Bolzensetzgerätes in einen Untergrund eintreibbar ist, wobei auf einem Schaft des Bolzens eine Hülse mit Aussengewinde angeordnet ist und der Schaft wenigstens teilweise in dem von der Hülse umgebenden Bereich mit einer Oberflächenprofilierung versehen ist.

Befestigungselemente der hier zur Diskussion stehenden Art werden mittels pulverkraftbetriebener Bolzensetzgeräte in Untergründe, die aus harten Werkstoffen wie Beton, Gestein, Metall und dergleichen bestehen, eingetrieben. Die Befestigungselemente dienen als Anschlusselemente für Teile, die an diesen Untergründen befestigt werden müssen.

Aus der US-PS 3,041,616 ist ein Befestigungselement mit einem, einen Kopf aufweisenden Bolzen bekannt, der mittels eines pulverkraftbetriebenen Bolzensetzgerätes in einen Untergrund eintreibbar ist, wobei auf einem Schaft des Bolzens eine Hülse mit Aussengewinde geführt ist und der Schaft eine Oberflächenprofilierung aufweist. Beim Setzvorgang des Bolzens wird eine Presssitzverbindung zwischen einer zentralen Durchtrittsöffnung der Hülse und der Oberflächenprofilierung des Schaftes erreicht. Auf das Aussengewinde der Hülse ist das zu befestigende Teil aufschraubbar oder mittels einer Mutter festlegbar. Hohe Belastungen aufgrund hoher, stossartiger Zugkräfte, die auf das Befestigungselement einwirken, können zu einem Versagen der Befestigung führen.

Der Erfindung liegt die Aufgabe zugrunde, ein Befestigungselement zu schaffen, das in der Lage ist, stossartige, auf den Bolzen wirkende Zugkräfte zu verhindern.

Erfindungsgemäss wird die Aufgabe dadurch gelöst, dass zwischen der Hülse und dem Kopf des Bolzens ein Dämpfungselement angeordnet ist.

Die an der Hülse angreifenden Zugkräfte werden aufgrund des erfindungsgemäss angeordneten Dämpfungselementes nicht stossartig, sondern gedämpft auf den Kopf des Bolzens übertragen.

Damit die an der Hülse angreifenden Zugkräfte gleichmässig auf den Kopf des Bolzens übertragen werden, ist das Dämpfungselement zweckmässigerweise hülsenförmig ausgebildet.

Aus herstelltechnischen und wirtschaftlichen Gründen sind die Hülse und das Dämpfungselement vorteilhafterweise einstückig ausgebildet.

Damit sich die Hülse auf dem Bolzen nicht verdreht, wenn ein Teil an dem gesetzten Befestigungselement befestigt wird und damit ein Teil der an der Hülse angreifenden Zugkräfte auf den Schaft des Bolzens übertragen werden kann, ist die Hülse zweckmässigerweise mittels eines Presssitzes mit dem Schaft des Bolzens verbunden. Die auf das Aussengewinde der Hülse wirkenden Zugkräfte werden somit einerseits über die Presssitzverbindung auf den Schaft des Bolzens, andererseits über das Dämpfungselement auf den Kopf des Bolzens übertragen. Die Oberflächenprofilierung am Schaft des Bolzens ist insbesondere als Randrierung ausgebildet.

Bei Überschreiten einer bestimmten Zugkraft verschiebt sich die Hülse auf dem Schaft trotz der Presssitzverbindung in Richtung Kopf des Bolzens. Dabei verformt sich das Dämpfungselement parallel zur Längsrichtung des Bolzens. Ist das Dämpfungselement derart verformt, dass es nicht mehr in der Lage ist, auftretende, stossartige Zugkräfte gedämpft auf den Kopf des Bolzen zu übertragen, so erfolgt ein Bruch des Bolzens oder ein Lösen des Bolzens im Untergrund.

Befestigungselemente, bei denen die an der Hülse angreifenden Zugkräfte zur Gänze vom Dämpfungselement auf den Kopf des Bolzens übertragen werden, können so ausgebildet sein, dass sic die Hülse und das daran befestigte Teil beim Überschreiten einer bestimmten Zugkraft vom Bolzen trennen. Dabei weist zweckmässigerweise die Hülse einen Innendurchmesser auf, der grösser ist als der Kopf des Bolzens.

Auftretende, stossartige Zugkräfte werden unter einer axialen, parallel zur Längsachse des Bolzens stattfindenden Verformung des Dämpfungselementes gedämpft auf den Kopf des Bolzens übertragen. Nachdem keine weitere axiale Verformung des Dämpfungselementes mehr möglich ist, verformt sich das Dämpfungselement in radialer Richtung. Das Dämpfungselement weitet sich dabei so weit auf, bis es über den Kopf des Bolzens rutschen kann. Über die Dimensionierung des Dämpfungselementes ist somit die Versagenslast des Befestigungselementes einstellbar. Der Aussendurchmesser des einstückig mit der Hülse ausgebildeten Dämpfungselementes kann grösser sein als der Aussendurchmesser des Kopfes.

Damit eine drehfeste Verbindung zwischen der Hülse und dem Bolzen bei Befestigungselementen erreicht werden kann, bei denen die an der Hülse angreifenden Zugkräfte zur Gänze vom Dämpfungselement auf den Kopf des Bolzens übertragen werden, ist zweckmässigerweise zwischen der Hülse und dem Schaft des Bolzens eine drehfest mit dem Schaft des Bolzens verbundene Klemmhülse mit einer Aussenprofilierung angeordnet, die mit einer Innenprofilierung der Hülse drehschlüssig zusammenwirkt. Die Aussen- und Innenprofilierung ist axial frei zueinander versetzbar. Die axiale Verformung des Dämpfungselementes beim Auftreten hoher, stossartiger Zugkräfte wird daher nicht beeinflusst und die drehschlüssige Verbindung gegenüber dem Schaft des Bolzens bleibt erhalten, bis sich das Dämpfungselement aufgrund der stossartigen Zugkräfte radial aufweitet und zusammen mit der Hülse vom Bolzen rutscht.

Aus fertigungstechnischen und wirtschaftlichen Gründen ist vorteilhafterweise die Klemmhülse mittels eines Presssitzes mit dem Schaft des Bolzens drehfest verbunden.

Damit das zu befestigende Teil mit dem Aussengewinde der Hülse in Verbindung gebracht werden kann, ist vorzugsweise der Aussendurchmesser des Dämpfungselementes kleiner als der Kemdurchmesser des Aussengewindes der Hülse.

Die Erfindung wird anhand von Figuren, die zwei Ausführungsbeispiele zeigen, näher erläutert. Es zeigen:
- Fig.1: ein erfindungsgemässes Befestigungselement, in geschnittener Darstellung und
- Fig. 2: ein weiteres Befestigungselement, in geschnittener Darstellung.

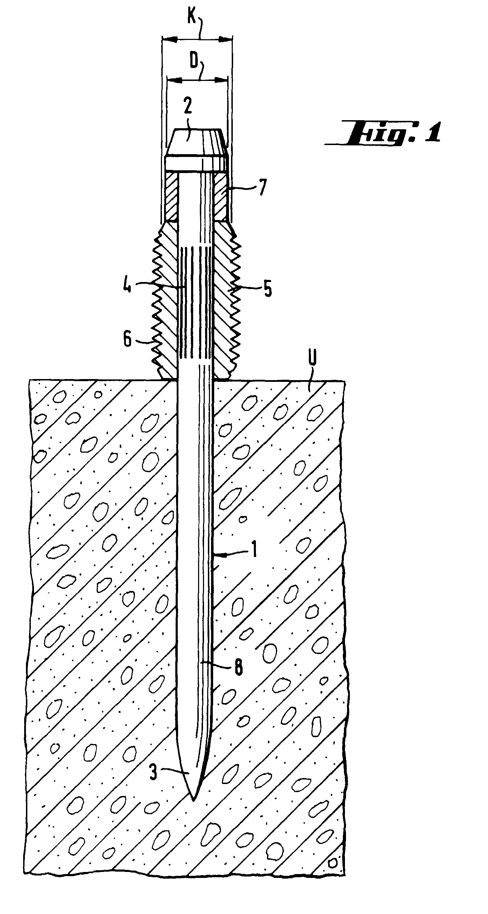

Das in Fig.1 dargestellte, in einem Untergrund U festgelegte Befestigungselement setzt sich zusammen aus einem Bolzen 1, der an einem setzrichtungsseitigen ersten Ende eine Spitze 3 und am gegenüberliegenden zweiten Ende einen Kopf 2 aufweist. Der Schaft 8 des Bolzens 1 ist mit einer sich teilweise über den Schaft 8 erstreckenden Oberflächenprofilierung 4 versehen. Im Bereich dieser Oberflächenprofilierung 4 ist eine Hülse 5 angeordnet, die mittels eines Presssitzverbindung mit dem Schaft 8 des Bolzens 1 verbunden ist. Auf der Aussenseite der Hülse 5 ist ein Aussengewinde 6 angeordnet.

Zwischen der Hülse 5 und dem Kopf 2 des Bolzens 1 ist ein Dämpfungselement 7 angeordnet. Der Aussendurchmesser D des Dämpfungselementes 7 ist kleiner als der Kerndurchmesser K des Aussengewindes 6, damit ein zu befestigendes, nicht dargestelltes Teil aufgeschraubt oder beispielsweise mit Hilfe einer Mutter festgelegt werden kann. Die Gesamtlänge von Hülse 5 und Dämpfungselement 7 ist kleiner als die Länge des Bolzens 1.

Die an der Hülse 5 des gesetzten Befestigungselements angreifenden Zugkräfte werden einerseits über die Presssitzverbindung auf den Schaft 8 des Bolzens 1, andererseits über das Dämpfungselement 7 auf den Kopf 2 des Bolzens 1 übertragen. Beim Auftreten hoher Zugkräfte verformt sich das Dämpfungselement 7 in Längsrichtung, bis es keine Dämpfungseigenschaften mehr besitzt. Nachfolgend auftretende, hohe Zugkräfte führen zu einem Versagen des Bolzens 1, indem er bricht oder sich im Untergrund löst.

Das Dämpfungselement 7 kann aus einem Material gefertigt sein, das in der Härte und Elastizität abweicht von dem Material aus dem die Hülse 5 besteht.

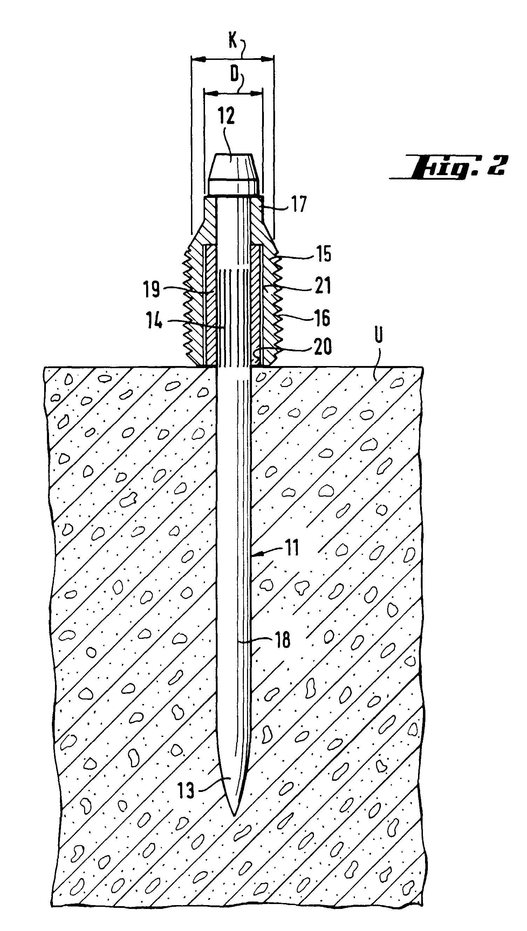

Das in Fig. 2 dargestellte, in einem Untergrund U festgelegte Befestigungselement setzt sich zusammen aus einem Bolzen, 11 der an einem setzrichtungsseitigen ersten Ende eine Spitze 13 und am gegenüberliegenden zweiten Ende einen Kopf 12 aufweist. Der Schaft 18 des Bolzens 11 ist mit einer sich teilweise über den Schaft 18 erstreckenden Oberflächenprofilierung 14 versehen. Im Bereich dieser Oberflächenprofilierung 14 ist eine Klemmhülse 19 angeordnet, die mittels einer Presssitzverbindung mit dem Schaft 18 des Bolzens 11 in Verbindung steht. Die Klemmhülse 19 besitzt auf der Aussenseite eine parallel zur Längserstreckung des Bolzens 11 verlaufende Aussenprofilierung 21, die mit einer entsprechenden, in einer Durchtrittsöffnung einer Hülse 15 mit Aussengewinde 16 angeordneten Innenprofilierung 20 zusammenwirkt. Die Aussenprofilierung 21 der Klemmhülse 19 und die Innenprofilierung 20 der Hülse 15 sind in Längsrichtung des Bolzens 11 frei zueinander versetzbar und drehfest miteinander verbunden.

Zwischen der Hülse 15 und dem Kopf 12 des Bolzens 11 ist ein Dämpfungselement 17 angeordnet, das einstückig mit der Hülse 15 ausgebildet ist. Der Aussendurchmesser D des Dämpfungselementes 17 ist grösser als der Aussendurchmesser des Kopfes 12 des Bolzens 11 und kleiner als der Kerndurchmesser K des Aussengewindes 16, damit ein zu befestigendes, nicht dargestelltes Teil aufgeschraubt oder beispielsweise mit Hilfe einer Mutter an der Hülse 15 festgelegt werden kann. Die Gesamtlänge von Hülse 15 und Dämpfungselement 17 ist kleiner als die Länge des Bolzens 11.

Die an der Hülse 15 des gesetzten Befestigungselements angreifenden, stossartigen Zugkräfte werden über das Dämpfungselement 17 auf den Kopf 12 des Bolzens 11 übertragen. Das Dämpfungselement 17 hat die Funktion, stossartige, hohe Zugkräfte gedämpft auf den Bolzen 11 zu übertragen. Dabei verformt sich das Dämpfungselement 17 in axialer Längsrichtung. Lässt es sich nicht weiter axial verformen, so weitet sich dieses bei nachfolgenden hohen, stossartigen Zugkräften radial auf, bis es und die ganze Hülse 15 über den Kopf 12 des Bolzens 11 rutschen können.

## Patentansprüche

1. Befestigungselement mit einem einen Kopf (2, 12) aufweisenden Bolzen (1, 11), der mittels eines pulverkraftbetriebenen Bolzensetzgerätes in einen Untergrund eintreibbar ist, wobei auf einem Schaft (8, 18) des Bolzens (1, 11) eine Hülse (5, 15) mit Aussengewinde (6, 16) angeordnet ist und der Schaft (8, 18) wenigstens teilweise in dem von der Hülse (5, 15) umgebenen Bereich mit einer Oberflächenprofilierung (4, 14) versehen ist, **dadurch gekennzeichnet,** dass zwischen der Hülse (5, 15) und dem Kopf (2, 12) des gesetzten Bolzens (1, 11) ein im wesentlichen unverformtes Dämpfungselement (7, 17) angeordnet ist.

2. Befestigungselement nach Anspruch 1, dadurch gekennzeichnet, dass das Dämpfungselement (7, 17) hülsenförmig ausgebildet ist.

3. Befestigungselement nach Anspruch 1 oder 2, dadurch gekennzeichnet, dass die Hülse (5, 15) und das Dämpfungselement (7, 17) einstückig ausgebildet sind.

4. Befestigungselement nach einem der Ansprüche 1 bis 3, dadurch gekennzeichnet, dass die Hülse (5) mittels eines Presssitzes mit dem Schaft (8) des Bolzens (1) verbunden ist.

5. Befestigungselement nach einem der Anprüche 1 bis 3, dadurch gekennzeichnet, dass die Hülse (15) einen Innendurchmesser aufweist, der grösser ist als der Durchmesser des Kopfes (12) des Bolzens (11).

6. Befestigungselement nach Anspruch 5, dadurch gekennzeichnet, dass zwischen der Hülse (15) und dem Schaft (18) des Bolzens (11) eine drehfest mit dem Schaft (18) des Bolzens (11) verbundene Klemmhülse (19) mit einer Aussenprofilierung (21) angeordnet ist, die mit einer Innenprofilierung (20) der Hülse (15) drehschlüssig zusammenwirkt

7. Befestigungselement nach Anspruch 6, dadurch gekennzeichnet, dass die Klemmhülse (19) mittels eines Presssitzes mit dem Schaft (18) des Bolzens (11) verbunden ist.

8. Befestigungselement nach einem der Ansprüche 1 bis 7, dadurch gekennzeichnet, dass der Aussendurchmesser (D) des Dämpfungselementes (7, 17) kleiner ist als der Kerndurchmesser (K) des Aussengewindes (6, 16) der Hülse (5, 15).

## Claims

1. Fixing element having a bolt (1, 11) incorporating a head (2, 12) and which is adapted to be driven into a base by means of a powder-force-operated bolt gun, there being arranged on a shank (8, 18) of the bolt (1, 11) a sleeve (5, 15) with an external thread (6, 16) and the shank (8, 18) being at least partly equipped with surface profiling (4, 14) in the zone enclosed by the sleeve (5, 15), characterised in that disposed between the sleeve (5, 15) and the head (2, 12) of the bolt (1, 11), once the latter has been driven home, is a substantially undeformed damping element (7, 17).

2. Fixing element according to claim 1, characterised in that the damping element (7, 17) is constructed in the shape of a sleeve.

3. Fixing element according to claim 1 or 2, characterised in that the sleeve (5, 15) and the damping element (7, 17) are constructed in one piece.

4. Fixing element according to any of claims 1 to 3, characterised in that the sleeve (5) is joined to the shank (8) of the bolt (1) by means of a press-fit.

5. Fixing element acccrding to any of claims 1 to 3, characterised in that the sleeve (15) has an internal diameter that is bigger than the diameter of the head (12) of the bolt (11).

6. Fixing element according to claim 5, characterised in that disposed between the sleeve (15) and -the shank (18) of the bolt (11) is a clamping sleeve (19) which is joined to the shank (18) of the bolt (11) in a manner locked against rotation and has external profiling (21) which cooperates rotatively with internal profiling (20) on the sleeve (15).

7. Fixing element according to claim 6, characterised in that the clamping sleeve (19) is joined to the shank (18) of the bolt (11) by means of a press-fit.

8. Fixing element according to any of claims 1 to 7, characterised in that the external diameter (D) of the damping element (7, 17) is smaller than the core diameter (K) of the external thread (6, 16) of the sleeve (5, 15).

## Revendications

1. Elément de fixation avec une cheville (1, 11) présentant une tête (2, 12), lequel peut être enfoncé dans un support au moyen d'un appareil de scellement de chevilles à explosion, une douille (5, 15) avec filetage extérieur (6, 16) étant disposée sur une tige (8, 18) de la cheville (1, 11) et la tige (8, 18) étant pourvue au moins partiellement d'un profilage de surface (4, 14) dans la zone entourée par la douille (5, 15), caractérisé en ce qu'un élément d'amortissement (7, 17) sensiblement non déformé est placé entre la douille (5, 15) et la tête (2, 12) de la cheville (1, 11) mise en place.

2. Elément de fixation selon la revendication 1, caractérisé en ce que l'élément d'amortissement (7, 17) a la forme d'une douille.

3. Elément de fixation selon la revendication 1 ou 2, caractérisé en ce que la douille (5, 15) et l'élément d'amortissement (7, 17) sont réalisés d'un seul tenant.

4. Elément de fixation selon l'une des revendications 1 à 3, caractérisé en ce que la douille (5) est reliée à la tige (8) de la cheville (1) par ajustage serré.

5. Elément de fixation selon l'une des revendications 1 à 3, caractérisé en ce que la douille (15) présente un diamètre intérieur, qui est supérieur au diamètre de la tête (12) de la cheville (11).

6. Elément de fixation selon la revendication 5, caractérisé en ce qu'entre la douille (15) et la tige (18) de la cheville (11) est prévue une douille de serrage (19), reliée solidairement en rotation à la tige (18) de la cheville (11), qui coopère à rotation avec un profilage intérieur (20) de la douille (15).

7. Elément de fixation selon la revendication 6, caractérisé en ce que la douille de serrage (19) est reliée à la tige (18) de la cheville (11) par ajustage serré.

8. Elément de fixation selon l'une des revendications 1 à 7, caractérisé en ce que le diamètre extérieur (D) de l'élément d'amortissement (7, 17) est inférieur au diamètre du noyau (K) du filetage extérieur (6, 16) de la douille (5, 15).
